# EUROPEAN PATENT SPECIFICATION

(11) **EP 3 599 112 B1**
(45) Date of publication and mention of the grant of the patent: **16.12.2020**
(21) Application number: 19185207.8
(22) Date of filing: 09.07.2019
(51) Int. Cl.: B60C 11/00, B60C 11/03, B60C 9/28

(54) **STUDLESS TYRE**
REIFEN OHNE SPIKE
PNEUMATIQUE SANS CRAMPONS

(30) Priority: 24.07.2018 JP 2018138650
(43) Date of publication of application: 29.01.2020
(73) Proprietor: Sumitomo Rubber Industries, Ltd., Kobe-shi, Hyogo-ken 651-0072 (JP)
(72) Inventor: FUJIMOTO, Yuki, Kobe-shi Hyogo 651-0072 (JP)
(74) Representative: Manitz Finsterwald Patent- und Rechtsanwaltspartnerschaft mbB

(56) References cited:
- EP-A1- 2 077 192
- JP-A- 2014 231 270
- US-B1- 6 408 908

## Description

### Technical Field

The present invention relates to a studless tyre, and in particular to a studless tyre capable of exerting both on-ice performance and steering stability on a dry road surface.

### Background Art

There have been proposed studless tyres having improved on-ice performance by providing a plurality of sipes in a tread portion thereof. In recent years, studless tyres are often used in seasons other than winter, and therefore there is a strong demand for improvement on not only the on-ice performance but also the steering stability on a dry road surface and uneven wear resistance performance.

Patent No. 6214490 (Patent Literature 1) has proposed a summer tyre in which a profile of a tread face is formed by three arcs convex outward in a radial direction, and a radius of each of the arcs is set in a predetermined range, for example. In the tyre disclosed in the Patent Literature 1, when an arc counted an i-th from a tyre equator thereof in an axially outward direction is defined as an arc Ci and a radius thereof is defined as a radius Ri, a ratio of a radius R2 to a radius R1 is set to be 28% or more and 43% or less, and a ratio of radius R3 to the radius R1 is set to be 2.5% or more and 8.0% or less. Thereby, in the tyre disclosed in the Patent Literature 1, it is possible that a tread face thereof has a rounded shape, therefore, it is possible that the uneven wear resistance performance is exerted while the steering stability is maintained.

A tyre in accordance with the preamble of claim 1 is known from JP 2014 231270 A and US 6 408 908 B1. A related tyre is described in EP 2 077 192 A1.

### Summary of the Invention

However, when a profile of the tread face of the tyre of the Patent Literature 1 is applied as it is to a studless tyre in order to improve the steering stability on a dry road surface and the like, a ground contacting area of the tread portion is decreased, therefore, it is possible that the on-ice performance is deteriorated.

Further, rigidity of the tread portion of a studless tyre is set to be smaller than that of a summer tyre. Thereby, in the studless tyre to which the profile of the tyre of the Patent Literature 1 is applied, due to decrease in the ground contacting area of the tread portion, it is also possible that the steering stability on a dry road surface is deteriorated as well.

The present invention was made in view of the above, and a primary object thereof is to provide a studless tyre capable of exerting both the on-ice performance and the steering stability on a dry road surface.

In one aspect of the present invention, a studless tyre comprises a tread portion provided with a plurality of sipes, wherein in a cross-sectional view perpendicular to a circumferential direction, a profile of a tread face between an equatorial plane and each of tread edges is formed by three arcs each convex outward in a radial direction, the arcs include an arc Ci counted an i-th from the equatorial plane in an axially outward direction and having a radius Ri, a tangent line of an arc C1 on the equatorial plane extends exactly in the axial direction, an arc C(i+1) and the arc ci make contact at a point where the arc C(i+1) and the arc ci intersect, a radius R(i+l) is less than the radius (Ri), a ratio of a radius R2 with respect to a radius R1 is 40% or more and 70% or less, and a ratio of a radius R3 with respect to the radius R1 is 15% or more and 30% or less. In a cross-sectional view perpendicular to the circumferential direction, when an imaginary line having an inclination angle θ with respect to the axial direction is an imaginary line Lt and when a contact point where the imaginary line Lt contacts with the tread face is a contact point Pt, and when an axial width between the equatorial plane and the contact point Pt is an axial width Wt, a ratio of the axial width Wt when the inclination angle θ is three degrees with respect to an axial width W between the equatorial plane and each of the tread edges is less than 65%.

In another aspect of the invention, it is preferred that when an axial width between the equatorial plane and an intersection point of an arc C2 and an arc C3 is an axial width W23, a ratio of the axial width W23 with respect to an axial width W between the equatorial plane and each of the tread edges is 65% or more and 75% or less.

In another aspect of the invention, it is preferred that when an axial width between the equatorial plane and an intersection point of the arc C1 and the arc C2 is an axial width W12, a ratio of the axial width W12 with respect to an axial width W between the equatorial plane and each of the tread edges is 35% or more and 45% or less.

In another aspect of the invention, it is preferred that rubber hardness of tread rubber arranged in the tread face is in a range of from 40 to 65 degrees.

In another aspect of the invention, it is preferred that a land ratio of the tread face is in a range of from 60% to 80%.

In another aspect of the invention, it is preferred that the studless tyre further comprises a belt arranged on an inner side in the radial direction of the tread portion, wherein when an axial width between the equatorial plane and each of outer ends of the belt is an axial width Wb, a ratio of the axial width Wb with respect to an axial width W between the equatorial plane and each of the tread edges is 90% or more and 98% or less.

In another aspect of the invention, it is preferred that the tread portion comprises a plurality of main grooves extending in the circumferential direction, and a plurality of land regions defined between the main grooves or between one of the main grooves and one of the tread edges adjacent thereto, and an intersection point between the arc C1 and an arc C2 and an intersection point between the arc C2 and an arc C3 are positioned in the land regions.

### Brief Description of the Drawings

Fig.1 is a cross-sectional view of a studless tyre as an embodiment of the present invention.
Fig. 2 is a diagram showing the profile of the tread face of the studless tyre of Fig. 1 together with main grooves.

### Description of the Preferred Embodiment

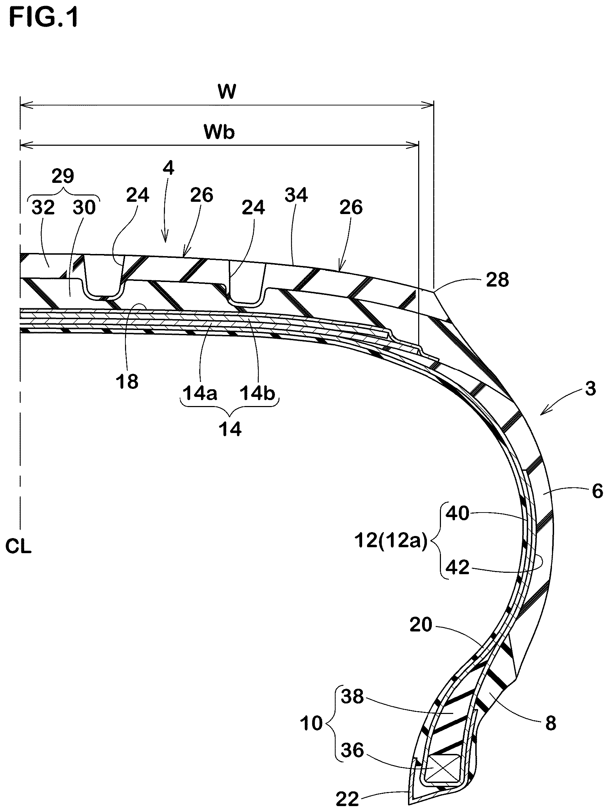

An embodiment of the present invention will now be described below in detail in conjunction with accompanying drawings. Fig. 1 is a cross-sectional view showing an example of a studless tyre according to the present embodiment. Fig. 1 is a cross-sectional view of a studless tyre (hereinafter may be simply referred to as "tyre") perpendicular to a circumferential direction. In Fig. 1, the vertical direction is a radial direction of the tyre 3, the lateral direction is an axial direction of the tyre 3, and a perpendicular direction to the paper surface is the circumferential direction of the tyre 3. In Fig. 1, a one dot chain line CL represents an equatorial plane of the tyre 3. The tyre 3 has a shape symmetrical with respect to an equatorial plane CL except for a tread pattern thereof.

In this specification, unless otherwise noted, the dimensions and the like of the tyre 3 are those measured in a standard state. The standard state is a state in which the tyre 3 is mounted on a standard rim (not shown), inflated to a standard inner pressure, and loaded with no tyre load.

The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.

The "standard inner pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO, but in a case of a passenger car, it is set to be 180 kPa.

The tyre 3 in this embodiment is provided with a tread portion 4, sidewall portions 6, clinches 8, beads 10, a carcass 12, a belt 14, a band 18, an inner liner 20, and chafers 22. As the tyre 3, a tubeless type pneumatic tyre is shown as an example, but it may be an airless tire. As an example, the tyre 3 in this embodiment is a tyre for a passenger car, however it is not limited to such an embodiment and it may be a tyre for a motorcycle, for heavy load, or the like, for example.

The tread portion 4 has a shape convex outwardly in the radial direction. The tread portion 4 forms a tread face 34 which is to be in contact with a road surface. As shown in the Figure, the tread portion 4 is provided with a plurality of main grooves 24 each extending in the circumferential direction. The main grooves 24 contribute to drainage of the tyre 3. Although not shown in the figure, the tread portion 4 is further provided with a plurality of sub grooves (not shown) each extending in a direction intersecting with the main grooves 24. The main grooves 24 and the sub grooves form the tread pattern. In the tyre 3 shown in the figure, the number of the main grooves 24 including the main grooves 24 not shown in this figure is four. The number of the main grooves 24 is not limited to four. The tread portion 4 may have three or less main grooves 24 or five or more main grooves 24, or may not have any main grooves 24 at all. Further, the tread portion 4 may not have any sub grooves.

An area sandwiched (defined) between the main grooves 24 adjacent to each other and an area defined between one of the main grooves 24 positioned outermost in the axial direction and one of tread edges 28 adjacent thereto are called land regions (ribs) 26. In the tyre 3 of Fig. 1, the number of the land regions 26 is five. When the tyre 3 is not provided with any main grooves 24, an area between the two tread edges 28 is the land region 26. In this case, the number of the land region 26 is one.

A land ratio of the tread face 34 can be suitably set. The land ratio in this embodiment is set in a range of from 60% to 80%. Thereby, it is possible that the tyre 3 secures large ground contacting area, therefore, it is possible that responsiveness on a dry road surface and an on-ice grip are improved. In this specification, the term "land ratio" means a ratio (S/Sa) between a total surface area (S) of the land regions 26 in the area between the tread edges 28 and a virtual surface are (Sa) obtained by filling all the grooves (including the main grooves 24 and the sub grooves (not shown)) in the area between the tread edges 28.

The tread face 34 of the tread portion 4 is provided with a plurality of sipes (not shown) as disclosed in a document (Japanese Unexamined Patent Application Publication No. 2018-08354), for example. The sipe means an incision having a width of less than 2 mm. It is possible that the sipes configured as such increases frictional force between an icy road surface as well as absorbs water on an icy road surface, therefore, it is helpful for improving the on-ice performance.

A tread rubber 29 arranged in the tread portion 4 is provided with a base layer 30 and a cap layer 32. The cap layer 32 is positioned on an outer side in the radial direction of the base layer 30 and arranged in the tread face 34. The cap layer 32 is overlaid on the base layer 30.

It is possible that rubber hardness of the cap layer 32 is suitably set. The rubber hardness of the cap layer 32 in this embodiment is set in a range of from 40 to 65 degrees. Thereby, the rigidity of the tread rubber 29 (the cap layer 32) is decreased, therefore, it is possible that the ground contacting area of the tyre 3 is ensured to be large. Thereby, it is possible that the tyre 3 increases the frictional force between a road surface, therefore, it is possible that the on-ice performance is improved. In this specification, the term "rubber hardness" means hardness measured by a type-A durometer in accordance with Japanese Industrial Standard JIS-K 6253 under an environment of 23 degrees Celsius.

Each of the sidewall portions 6 extends substantially inwardly in the radial direction from a respective one of ends of the tread portion 4. An outer end in the radial direction of each of the sidewall portions 6 is connected with the tread portion 4. The sidewall portions 6 are made from crosslinked rubber which is excellent in cut resistance and weatherproof. The sidewall portions 6 prevents the carcass 12 from being damaged.

Each of the clinches 8 is positioned on a substantially inner side in the radial direction of a respective one of the sidewall portions 6. Each of the clinches 8 is positioned on an outer side in the axial direction of a respective one of the beads 10 and the carcass 12. The clinches 8 are made from crosslinked rubber which is excellent in wear resistance. The clinches 8 are to be in contact with flanges of a tyre rim (not shown).

Each of the beads 10 is positioned on an inner side in the axial direction of a respective one of the clinches 8. Each of the beads 10 includes a core 36 and an apex 38 extending outwardly in the radial direction from the core 36. Each of the cores 36 has a ring shape extending along the circumferential direction of the tyre 3. Each of the cores 36 includes a wound non-stretchable wire. The typical material of the wire is steel. Each of the apexes 38 has a shape tapered outwardly in the radial direction. The apexes 38 are made from crosslinked rubber having high hardness.

As the carcass 12 in this embodiment, an example is shown in which the carcass 12 is made by a carcass ply (12a), but it may be made of two carcass plies (not shown). The carcass ply (12a) extends so as to be bridged between the beads 10 on both sides and extends along the tread portion 4 and the sidewall portions 6. The carcass ply (12a) is turned up around each of the cores 36 from the inner side to the outer side in the axial direction. By this turned up, a main portion 40 and turned-up portions 42 are formed in the carcass ply (12a).

Although not shown, the carcass ply (12a) is formed by a number of cords arranged in parallel and a topping rubber. An absolute value of an angle of each of the cords with respect to the equatorial plane CL is in a range of from 75 to 90 degrees, for example. In other words, the carcass 12 has a radial structure. The cords in this embodiment are made of organic fibers. Examples of preferred organic fibers include polyester fibers, nylon fibers, rayon fibers, polyethylene naphthalate fibers, and aramid fibers.

The belt 14 is positioned on the inner side in the radial direction of the tread portion 4. The belt 14 is overlaid on the carcass 12. The belt 14 reinforces the carcass 12. As an example of the belt 14 in this embodiment, the belt 14 is formed by a first layer (14a) and a second layer (14b). Although not shown, each of the first layer (14a) and the second layer (14b) is formed by a number of cords arranged in parallel and a topping rubber. Each of the cords is inclined with respect to the equatorial plane CL. An absolute value of an inclination angle of each of the cords is in a range of from 10 to 35 degrees. An inclination direction with respect to the equatorial plane CL of each of the cords of the first layer (14a) is opposite to an inclination direction with respect to the equatorial plane CL of each of the cords of the second layer (14b). A preferred material of the cords is steel. Organic fibers may be used for the cords.

The band 18 is formed by at least one, on in this embodiment, full band ply covering the entire width of the belt 14. Each of ends of the band 18 terminates at a position on the outer side in the axial direction of a respective one of outer ends of the first layer (14a). Although not shown, the band 18 is formed by cords and a topping rubber. The cords are wound in a spiral manner. This band 18 has a so-called jointless structure. The cords extend substantially in the circumferential direction. An angle of each of the cords with respect to the circumferential direction is 5 degrees or less, more preferably 2 degrees or less. The cords are made of organic fibers. Examples of preferred organic fibers include nylon fibers, polyester fibers, rayon fibers, polyethylene naphthalate fibers, and aramid fibers. It is possible that the band 18 configured as such makes ground contact pressure uniform over the tyre axial direction of the tread portion 4, therefore, it is possible that the responsiveness on a dry road surface and the on-ice grip are improved.

The inner liner 20 is positioned on an inner side of the carcass 12. The inner liner 20 is bonded to an inner surface of the carcass 12. The inner liner 20 is made from crosslinked rubber. Rubber having an excellent air impermeability is used for the inner liner 20. Typical base rubber of the inner liner 20 is butyl rubber or halogenated butyl rubber. The inner liner 20 holds the inner pressure of the tyre 3.

Each of the chafers 22 is positioned in the vicinity of a respective one of the beads 10. when the tyre 3 is mounted on a tyre rim (not shown), each of the chafers 22 comes into close contact with the rim. By this contact, the vicinities of the beads 10 are protected. The chafers 22 are made of cloth impregnated with rubber. Each of the chafers 22 may be formed integrally with a respective one of the clinches 8.

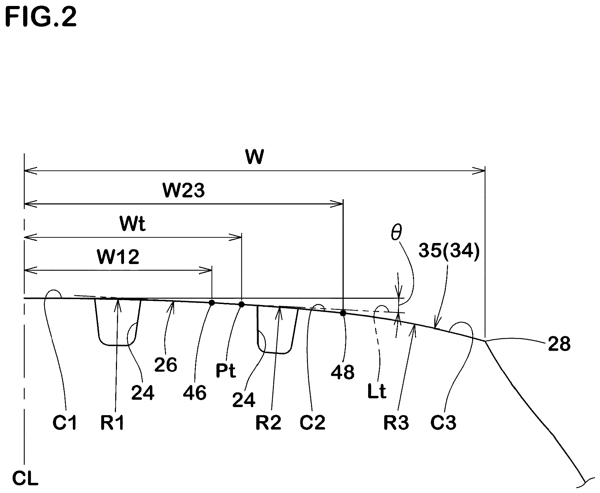

Fig. 2 is a diagram showing a profile 35 of the tread face 34 of the tyre 3 of Fig. 3 together with the main grooves 24. The profile 35 of the tread face 34 is a contour of a virtual tread face obtained as the tread portion 4 has no grooves. In the present invention, dimensions and angles with respect to this profile 35 correspond to those of a cavity surface of a mold. Similar to Fig. 1, Fig. 2 shows a cross-sectional view of the tyre 3 taken perpendicular to the circumferential direction. In Fig. 2, the vertical direction is the radial direction of the tyre 3, the lateral direction is the axial direction of the tyre 3, and the perpendicular direction to the paper surface is the circumferential direction of the tyre 3. Further, in Fig. 2, the one dot chain line CL represents the equatorial plane of the tyre 3.

The profile 35 of the tread face 34 between the equatorial plane CL and each of the tread edges 28 is formed by a plurality of arcs each convex outward in the radial direction. The profile 35 in this embodiment is formed by three arcs.

Here, "i" is a natural number, and an i-th arc counted from the equatorial plane (CL) toward the tread edge 28 is referred to as an arc (Ci), and the radius of the arc (Ci) is referred to as a radius (Ri). The center of an arc C1 is positioned on the equatorial plane (CL). A tangent line of the arc C1 on the equatorial plane (CL) extends exactly in the axial direction. Two arcs (Ci) and (Ci+l) adjacent to each other make contact with each other at the point where they intersect. A radius R(i+l) is no greater than radius (Ri).

In this tyre 3, in determining the profile 35 of the tread face 34, a ground contacting width of the tyre 3 is determined first. In determining the ground contacting width, the on-ice performance, the steering stability on a dry road surface, anti-wear performance, and the like are taken into consideration, for example. Once the ground contacting width of the tyre 3 is determined, widths, number, and spacing of the main grooves 24 are determined. In other words, number, positions and widths of the land regions 26 are determined. These are determined mainly in consideration of drainage property, on-snow performance, and the like.

In the tyre 3 in this embodiment, a ratio (R2/R1) of a radius R2 of an arc C2 with respect to a radius R1 of the arc C1 is set to be 40% or more and 70% or less, and a ratio (R3/R1) of a radius R3 of an arc C3 with respect to the radius R1 of the arc C1 is set to be 15% or more and 30% or less. In this specification, all "ratios" are expressed as "percent (%)".

The ratio (R2/R1) is set to be 70% or less, even during cornering with a camber angle, it is possible that the ground contact pressure is prevented from being concentrated on the tread face 34 forming the arc C2. Further, the ratio (R3/R1) is set to be 30% or less, therefore, it is possible that the arc C2 and the arc C3 are connected with the small radius R3. Thereby, in the tyre 3, even during cornering with a larger camber angle, it is possible that the ground contact pressure is prevented from being concentrated on the tread face 34 forming the arc C3. Therefore, the tyre 3 enables stable cornering on a dry road surface, thereby, it is possible that the steering stability on a dry road surface is improved.

The ratio (R2/R1) is set to be 40% or more, therefore, it is possible that the arc C1 and the arc C2 are connected with the large radius R2. Thereby, in the tyre 3 in this embodiment, it is possible that the tread face 34 forming the arc C1 and the arc C2 contacts with the ground uniformly. Further, the ratio (R3/R1) is set to be 15% or more, it is possible that the tread face 34 forming the arc C2 and the arc C3 contacts with the ground uniformly. Thereby, it is possible that the tyre 3 prevents the ground contacting area of the tread portion 4 from decreasing, therefore, it is possible that the responsiveness on a dry road surface and the on-ice grip are improved.

As just described, in the tyre 3 in this embodiment, the ratio (R2/R1) and the ratio (R3/R1) satisfy the above-mentioned ranges, therefore, it is possible that both the on-ice performance and the steering stability on a dry road surface are exerted.

Note that if the ratio (R2/R1) is more than 70%, during cornering with a camber angle, the ground contact pressure is concentrated on the tread face 34 forming the arc C2, therefore, it is possible that the steering stability on a dry road surface is deteriorated and that uneven wear occurs. To the contrary, if the ratio (R2/R1) is less than 40%, the tread face 34 forming the arc C1 and the arc C2 cannot contact with the ground uniformly, therefore, it is possible that the responsiveness on a dry road surface and the on-ice grip are deteriorated. From this point of view, it is preferred that the ratio (R2/R1) is 65% or less and 45% or more.

Further, if the ratio (R3/R1) is more than 30%, during cornering with a large camber angle, the ground contact pressure is concentrated on the tread face 34 forming the arc C3, therefore, it is possible that the steering stability on a dry road surface is deteriorated and that the uneven wear occurs. To the contrary, if the ratio (R3/R1) is less than 15%, the tread face 34 forming the arc C2 and the arc C3 cannot contact with the ground uniformly, therefore, it is possible that the responsiveness on a dry road surface and the on-ice grip are deteriorated. From this point of view, it is preferred that the ratio (R3/R1) is 27% or less and 18% or more.

The radius R1 of the arc C1 can be suitably set in accordance with the size of the tyre 3. It is preferred that the radius R1 in this embodiment is set to be 500 mm or more and 900 mm or less. By setting the radius R1 to 900 mm or less, it is possible that the tread face 34 is made to have an appropriately rounded shape. Thereby, the tyre 3 enables stable cornering on a dry road surface, therefore, it is possible that the steering stability on a dry road surface is improved. On the other hand, by setting the radius R1 to 500 mm or more, it is possible that the ground contacting area of the tread portion 4 is prevented from decreasing. Thereby, it is possible that the tyre 3 improves the responsiveness on a dry road surface and the on-ice grip. From this point of view, it is preferred that the radius R1 is 800 mm or less and 600 mm or more.

In Fig. 2, a double arrow (W) means an axial width between the equatorial plane CL and one of the tread edges 28. Further, a double arrow W12 means an axial width between the equatorial plane CL and an intersection point 46 of the arc C1 and the arc C2. It is preferred that a ratio (W12/W) of the axial width W12 with respect to the axial width (W) is set to be 35% or more and 45% or less.

By setting the ratio (W12/W) to 45% or less, it is possible that the tread face 34 is made to have an appropriately rounded shape. Thereby, the tyre 3 enables stable cornering on a dry road surface, therefore, it is possible that the steering stability on a dry road surface is improved. Conversely, by setting the ratio (W12/W) to 35% or more, it is possible that the tread face 34 forming the arc C1 and the arc C2 contacts with the ground uniformly. Thereby, it is possible that the tyre 3 prevents decrease in the ground contacting area of the tread portion 4, therefore, it is possible that the responsiveness on a dry road surface and the on-ice grip are improved. From this point of view, it is more preferred that the ratio (W12/W) is 42% or less and 38% or more.

In Fig. 2, a double arrow W23 means an axial width between the equatorial plane CL and an intersection point 48 of the arc C2 and the arc C3. It is preferred that a ratio (W23/W) of an axial width W23 with respect to the axial width (W) is set to be 65% or more and 75% or less.

By setting the ratio (W23/W) to 75% or less, even during cornering with a large camber angle, it is possible that the ground contact pressure is prevented from being concentrated on the tread face 34 forming the arc C3. Thereby, the tyre 3 enables stable cornering on a dry road surface, therefore, it is possible that the steering stability on a dry road surface is improved. On the other hand, by setting the ratio (W23/W) to 65% or more, it is possible that the tread face 34 forming the arc C2 and the arc C3 contacts with the ground uniformly. Thereby, it is possible that tyre 3 prevents the ground contacting area of the tread portion 4 from decreasing, therefore, it is possible that the responsiveness on a dry road surface and the on-ice grip are improved. From this point of view, it is more preferred that the ratio (W23/W) is 73% or less and 67% or more.

It is preferred that the intersection point 46 between the arc C1 and the arc C2 and the intersection point 48 between the arc C2 and the arc C3 are positioned in the land regions 26. The reason for this is that if the intersection points 46 and 48 are arranged at the positions of the main grooves 24, due to a difference in a curvature of the arcs on both sides of each of the intersection points 46 and 48 (that is the arc C1, C2, and C3), it becomes easy for bending of the tread face 34 (bending of the tread portion 4) to occur. In this embodiment, by arranging the intersection points 46 and 48 in the land regions 26, it is possible that the tread face 34 id prevented from bending, therefore, it is possible that the ground contact pressure is prevented from being ununiform. Thereby, it is possible that the tyre 3 improves the responsiveness on a dry road surface and the on-ice grip.

In Fig. 2, a straight line (Lt) means an imaginary line having an inclination angle θ with respect to the axial direction. The imaginary line (Lt) is inclined radially inwardly as it goes from the inner side to the outer side in the axial direction. A point (Pt) is a contact point where the imaginary line (Lt) contacts with the profile 35 of the tread face 34. A double arrow (Wt) means an axial width between the equatorial plane CL and the contact point (Pt). The axial width (Wt) varies depending on the value of the inclination angle θ. Under the same profile 35, the larger the inclination angle θ, the larger the axial width (Wt) is.

A ratio (Wt/W) of the axial width (Wt) with respect to the axial width (W) when the inclination angle θ is three degrees is set to be 65% or less. By setting the ratio (Wt/W) when the inclination angle θ is three degrees to 65% or less, even during cornering with a large camber angle, it is possible that the ground contact pressure is prevented from being concentrated on the tread face 34 forming the arc c3. Thereby, the tyre 3 enables stable cornering on a dry road surface, therefore, it is possible that the steering stability on a dry road surface and the on-ice grip are improved.

In Fig. 1, the double arrow (W) means the axial width between the equatorial plane CL and one of the tread edges 28. It is same as the axial width (W) of Fig. 2. A double arrow (Wb) means an axial width between the equatorial plane CL and one of outer ends of the belt 14 (the first layer (14a)). It is preferred that a ratio (Wb/W) of the axial width (Wb) with respect to the axial width (W) is set to be 90% or more and 98% or less.

By setting the ratio (Wb/W) to be 98% or less, it is possible that the rigidity on a side of the tread edges 28 is prevented from becoming excessively large. Thereby, in the tyre 3, the ground contact pressure on the side of the tread edges 28 is suppressed properly, therefore, it is possible that the uneven wear resistance performance is improved. On the other hand, by setting the ratio (Wb/W) to be 90% or more, the rigidity on the side of the tread edges 28 is maintained properly. Thereby, the tyre 3 enables stable cornering on a dry road surface. From this point of view, it is preferred that the ratio (Wb/W) is 92% or more.

While detailed description has been made of the tyre as an especially preferred embodiment of the present invention, the present invention can be embodied in various forms without being limited to the illustrated embodiment.

### Working Examples (Examples)

Tyres (Examples 1 to 14 and References 1 to 4) having the basic structure shown in Fig. 1 and the profile of the tread face formed by three arcs according to the specifications listed in Table 1 were made by way of test.
Then the steering stability on a dry road surface and the on-ice performance were evaluated for each of the test tyres.
The common specifications were as follows.

Tyre size: 205/55R16
Rim size: 16 x 7.0
Inner pressure: 230 kPa
Axial width (w): 90 mm
Radius R1 of Arc C1: 775 mm
Groove depth of Main groove: 8.5 mm
Land ratio: 70%
Ratio (Wb/W): 96% (Axial width (Wb) between equatorial plane and outer end of belt: 86 mm)
Rubber hardness of tread rubber: 52 degrees
Test vehicle: Rear-wheel drive vehicle (displacement of 1800 cc)
Test methods were as follows.

### < Steering stability on a dry road surface >

The test tyres were mounted on the test vehicle under the above-described conditions, then while a test driver drove the test vehicle on a dry road surface of a test course, characteristics related to steering were evaluated by the driver's feeling. The test results are indicated by an index based on the Example 1 being 100, wherein the larger the numerical value, the better the steering stability on a dry road surface is.

### < On-ice performance >

The test tyres were mounted on the test vehicle under the above-described conditions, then while the test driver drove the test vehicle on an icy/snowy road surface of a test course, the grip and the characteristics related to steering were evaluated by the driver's feeling.
The test results are indicated by an index based on the Example 1 being 100, wherein the larger the numerical value, the better the on-ice performance is.

The test results are shown in Table 1.

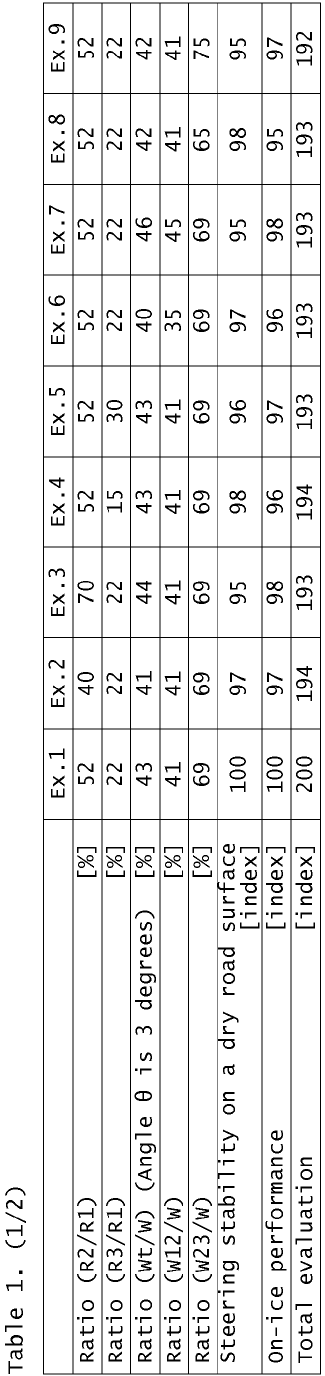

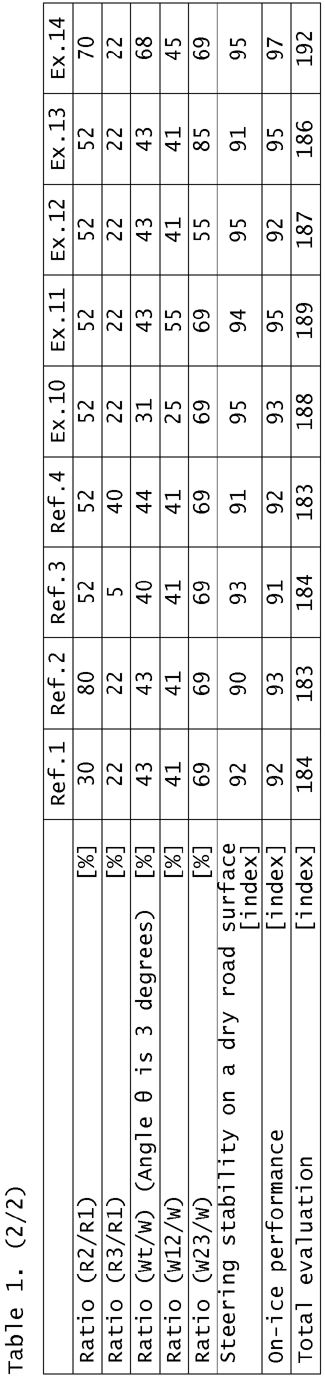

From the test results, it was confirmed that the tyres as the Examples exerted both the on-ice performance and the steering stability on a dry road surface as compared with the tyres as the References.

## Claims

1. A studless tyre (3) comprising a tread portion (4) provided with a plurality of sipes, wherein
in a cross-sectional view perpendicular to a circumferential direction, a profile of a tread face (34) between an equatorial plane (CL) and each of tread edges (28) is formed by three arcs each convex outward in a radial direction,
the arcs include an arc ci counted an i-th from the equatorial plane in an axially outward direction and having a radius Ri,
a tangent line of an arc C1 on the equatorial plane (CL) extends exactly in the axial direction,
an arc C(i+1) and the arc ci make contact at a point where the arc C(i+1) and the arc ci intersect,
a radius R(i+1) is equal to or less than the radius (Ri), **characterized in that**
a ratio of a radius R2 with respect to a radius R1 is 40% or more and 70% or less,
a ratio of a radius R3 with respect to the radius R1 is 15% or more and 30% or less, and
in a cross-sectional view perpendicular to the circumferential direction, when an imaginary line having an inclination angle θ with respect to the axial direction is an imaginary line Lt and when a contact point where the imaginary line Lt contacts with the tread face is a contact point Pt, and when an axial width between the equatorial plane and the contact point Pt is an axial width Wt, a ratio of the axial width Wt when the inclination angle θ is three degrees with respect to an axial width W between the equatorial plane and each of the tread edges is 65% or less.

2. The studless tyre (3) according to claim 1, wherein
when an axial width between the equatorial plane (CL) and an intersection point of an arc C2 and an arc C3 is an axial width W23, a ratio of the axial width W23 with respect to an axial width W between the equatorial plane (CL) and each of the tread edges (28) is 65% or more and 75% or less.

3. The studless tyre (3) according to claim 1 or 2, wherein
when an axial width between the equatorial plane (CL) and an intersection point of the arc C1 and the arc C2 is an axial width W12, a ratio of the axial width W12 with respect to an axial width w between the equatorial plane (CL) and each of the tread edges (28) is 35% or more and 45% or less.

4. The studless tyre (3) according to any one of claims 1 to 3, wherein
rubber hardness of tread rubber arranged in the tread face (34) is in a range of from 40 to 65 degrees.

5. The studless tyre (3) according to any one of claims 1 to 4, wherein
a land ratio of the tread face (34) is in a range of from 60% to 80%.

6. The studless tyre (3) according to any one of claims 1 to 5 further comprising a belt (14) arranged on an inner side in the radial direction of the tread portion (4), wherein
when an axial width between the equatorial plane (CL) and each of outer ends of the belt (14) is an axial width Wb, a ratio of the axial width Wb with respect to an axial width W between the equatorial plane (CL) and each of the tread edges (28) is 90% or more and 98% or less.

7. The studless tyre according to any one of claims 1 to 6, wherein
the tread portion (4) comprises a plurality of main grooves (24) extending in the circumferential direction, and a plurality of land regions (26) defined between the main grooves (24) or between one of the main grooves (24) and one of the tread edges (28) adjacent thereto, and
an intersection point between the arc C1 and an arc C2 and an intersection point between the arc C2 and an arc C3 are positioned in the land regions.

## Patentansprüche

1. Spikeloser Reifen (3) mit einem Laufflächenabschnitt (4), der mit einer Vielzahl von Feinschnitten versehen ist, wobei
in einer Querschnittsansicht senkrecht zu einer Umfangsrichtung ein Profil einer Laufflächenseite (34) zwischen einer Äquatorialebene (CL) und jeder der Laufflächenkanten (28) durch drei Bögen gebildet ist, die jeweils in einer radialen Richtung nach außen konvex sind,
die Bögen einen Bogen Ci enthalten, der ein i-ter von der Äquatorialebene aus axial nach außen gezählt wird und einen Radius Ri aufweist,
eine Tangente eines Bogens C1 auf der Äquatorialebene (CL) sich genau in der axialen Richtung erstreckt,
ein Bogen C(i+1) und der Bogen ci sich an einem Punkt berühren, an dem sich der Bogen C(i+1) und der Bogen ci sich schneiden,
ein Radius R(i+1) gleich oder kleiner als der Radius (Ri) ist,
**dadurch gekennzeichnet, dass**
ein Verhältnis eines Radius R2 in Bezug auf einen Radius R1 40% oder mehr und 70% oder weniger beträgt,
ein Verhältnis eines Radius R3 in Bezug auf den Radius R1 15% oder mehr und 30% oder weniger beträgt, und
in einer Querschnittsansicht senkrecht zur Umfangsrichtung, wenn eine imaginäre Linie mit einem Neigungswinkel θ in Bezug auf die axiale Richtung eine imaginäre Linie Lt ist, und wenn ein Kontaktpunkt, an dem die imaginäre Linie Lt die Laufflächenseite berührt, ein Kontaktpunkt Pt ist, und wenn eine axiale Breite zwischen der Äquatorialebene und dem Kontaktpunkt Pt eine axiale Breite Wt ist, ein Verhältnis der axialen Breite Wt, wenn der Neigungswinkel θ drei Grad in Bezug auf eine axiale Breite W zwischen der Äquatorialebene und jeder der Laufflächenkanten beträgt, 65% oder weniger beträgt.

2. Spikeloser Reifen (3) nach Anspruch 1, wobei, wenn eine axiale Breite zwischen der Äquatorialebene (CL) und einem Schnittpunkt eines Bogens C2 und eines Bogens C3 eine axiale Breite W23 ist, ein Verhältnis der axialen Breite W23 in Bezug auf eine axiale Breite W zwischen der Äquatorialebene (CL) und jeder der Laufflächenkanten (28) 65 % oder mehr und 75 % oder weniger beträgt.

3. Spikeloser Reifen (3) nach Anspruch 1 oder 2, wobei, wenn eine axiale Breite zwischen der Äquatorialebene (CL) und einem Schnittpunkt des Bogens C1 und des Bogens C2 eine axiale Breite W12 ist, ein Verhältnis der axialen Breite W12 in Bezug auf eine axiale Breite W zwischen der Äquatorialebene (CL) und jeder der Laufflächenkanten (28) 35% oder mehr und 45% oder weniger beträgt.

4. Spikeloser Reifen (3) nach einem der Ansprüche 1 bis 3, wobei die Gummihärte des Laufflächengummis, der in der Lauffläche (34) angeordnet ist, in einem Bereich von 40 bis 65 Grad liegt.

5. Spikeloser Reifen (3) nach einem der Ansprüche 1 bis 4, wobei ein Landverhältnis der Laufflächenseite (34) in einem Bereich von 60% bis 80% liegt.

6. Spikeloser Reifen (3) nach einem der Ansprüche 1 bis 5, der ferner einen Gürtel (14) umfasst, der auf einer Innenseite in der radialen Richtung des Laufflächenabschnitts (4) angeordnet ist,
wobei, wenn eine axiale Breite zwischen der Äquatorialebene (CL) und jedem der äußeren Enden des Gürtels (14) eine axiale Breite Wb ist, ein Verhältnis der axialen Breite Wb in Bezug auf eine axiale Breite W zwischen der Äquatorialebene (CL) und jeder der Laufflächenkanten (28) 90% oder mehr und 98% oder weniger beträgt.

7. Spikeloser Reifen nach einem der Ansprüche 1 bis 6, wobei
der Laufflächenabschnitt (4) eine Vielzahl von Hauptrillen (24), die sich in der Umfangsrichtung erstrecken, und eine Vielzahl von Landbereichen (26) umfasst, die zwischen den Hauptrillen (24) oder zwischen einer der Hauptrillen (24) und einer der Laufflächenkanten (28) benachbart dazu definiert sind, und
ein Schnittpunkt zwischen dem Bogen C1 und einem Bogen C2 und ein Schnittpunkt zwischen dem Bogen C2 und einem Bogen C3 sich in den Landbereichen befinden.

## Revendications

1. Pneumatique sans crampons (3) comprenant une portion formant bande de roulement (4) dotée d'une pluralité de fentes, dans lequel
dans une vue en section transversale perpendiculaire à une direction circonférentielle, un profil d'une face de roulement (34) entre un plan équatorial (CL) et chacun des bords de roulement (28) est formé par trois arcs, chacun avec une convexité vers l'extérieur dans une direction radiale,
les arcs incluent un arc Ci, compté comme étant le i-ième depuis le plan équatorial dans une direction axialement vers l'extérieur et ayant un rayon Ri,
une ligne tangente d'un arc C1 sur le plan équatorial (CL) s'étend exactement dans la direction axiale,
un arc C(i+1) et l'arc Ci sont en contact à un point où l'arc C(i+1) et l'arc Ci se recoupent,
un rayon R(i+1) est égal ou inférieur au rayon (Ri),
**caractérisé en ce que**
un rapport d'un rayon R2 sur un rayon R1 est de 40 % ou plus et 70 % ou moins,
un rapport d'un rayon R3 sur le rayon R1 est de 15 % ou plus et 30 % ou moins, et
dans une vue en section transversale perpendiculaire à la direction circonférentielle, quand une ligne imaginaire ayant un angle d'inclinaison θ par rapport à la direction axiale est une ligne imaginaire Lt et quand un point de contact où la ligne imaginaire Lt est en contact avec la face de roulement est un point de contact Pt, et quand une largeur axiale entre le plan équatorial et le point de contact Pt est une largeur axiale Wt, un rapport de la largeur axiale Wt quand l'angle d'inclinaison θ est de 3° sur une largeur axiale W entre le plan équatorial et chacun des bords de roulement est de 65 % ou moins.

2. Pneumatique sans crampons (3) selon la revendication 1, dans lequel quand une largeur axiale entre le plan équatorial (CL) et un point d'intersection d'un arc C2 et d'un arc C3 est une largeur axiale W23, un rapport de la largeur axiale W23 sur une largeur axiale W entre le plan équatorial (CL) et chacun des bords de roulement (28) est de 65 % ou plus et 75 % ou moins.

3. Pneumatique sans crampons (3) selon la revendication 1 ou 2, dans lequel
quand une largeur axiale entre le plan équatorial (CL) et un point d'intersection de l'arc C1 et de l'arc C2 est une largeur axiale W12, un rapport de la largeur axiale W12 sur une largeur axiale W entre le plan équatorial (CL) et chacun des bords de roulement (28) est de 35 % ou plus et 45 % ou moins.

4. Pneumatique sans crampons (3) selon l'une quelconque des revendications 1 à 3, dans lequel
une dureté du caoutchouc de roulement agencé dans la face de roulement (34) est dans une plage allant de 40 à 65°.

5. Pneumatique sans crampons (3) selon l'une quelconque des revendications 1 à 4, dans lequel
un rapport de relief de la face de roulement (34) est dans une plage allant de 60 % à 80 %.

6. Pneumatique sans crampons (3) selon l'une quelconque des revendications 1 à 5, comprenant en outre une ceinture (14) agencée sur un côté intérieur dans la direction radiale de la portion formant bande de roulement (4), dans lequel
quand une largeur axiale entre le plan équatorial (CL) et chacune des extrémités extérieures de la ceinture (14) est une largeur axiale Wb, un rapport de la largeur axiale Wb sur une largeur axiale W entre le plan équatorial (CL) et chacun des bords de roulement (28) est de 90 % ou plus et 98 % ou moins.

7. Pneumatique sans crampons selon l'une quelconque des revendications 1 à 6, dans lequel
la portion formant bande de roulement (4) comprend une pluralité de rainures principales (24) s'étendant dans la direction circonférentielle, et une pluralité de régions en relief (26) définies entre les rainures principales (24) ou entre l'une des rainures principales (24) et l'un des bords de roulement (28) adjacent à celle-ci, et
un point d'intersection entre l'arc C1 et un arc C2 et un point d'intersection entre l'arc C2 et un arc C3 sont positionnés dans les régions en relief.
